# EUROPEAN PATENT APPLICATION

(11) **EP 1 858 199 A2**
(43) Date of publication of application: **21.11.2007**
(21) Application number: 07100061.6
(22) Date of filing: 03.01.2007
(51) Int. Cl.: H04L 12/24

(54) **Communication system and management device and relay device used therein**

(30) Priority: 17.05.2006 JP 2006137478
(71) Applicant: Fujitsu Ltd., Kawasaki-shi, Kanagawa 211-8588 (JP)
(72) Inventor: Oyama, Takuji, c/o Fujitsu Limited, Kawasaki-shi, Kanagawa 211-8588 (JP); Suzuki, Hidehiko, c/o Fujitsu Limited, Kawasaki-shi, Kanagawa 211-8588 (JP); Ando, Tatsuhiro, c/o Fujitsu Limited, Kawasaki-shi, Kanagawa 211-8588 (JP)
(74) Representative: Wilding, Frances Ward

(57) **Abstract**

The present invention provides a communication system facilitating introduction into an existing network and improving a quality of service of communications. The communication system is configured by connecting a relay device (21, 22, 23) performing wireless communications with a terminal (42, 43, 44), a management device (11) managing the relay device and a server to each other via an IP network, the relay device has a packet generating means generating an encapsulated packet containing, as a payload, and transferring means transferring the encapsulated packet to the management device, and the management device has a receiving means receiving the encapsulated packet transmitted from the relay device, and a transmitting means transmitting a predetermined encapsulated packet in the encapsulated packets received by the receiving means back to the relay device.

## Description

### BACKGROUND OF THE INVENTION

### 1. Field of the invention

The present invention relates to a communication system for providing a communication service by connecting a wireless IP (Internet Protocol) network and a wired IP network, and relays to a communication relay method used for this communication system.

### 2. Description of the related art

Actualized is an IP network system which provides an IP telephony service etc by connecting the wireless IP network such as a wireless LAN (Local Area Network) to the wired IP network. This type of conventional system includes a wireless transmission device (which will hereinafter be referred to as an access point (AP)), an SIP (Session Initiation Protocol) server, etc, and provides the IP telephony service to a wireless IP terminal connected to the conventional system by the AP. The IP telephony service is actualized based on, e.g., VoIP (Voice over Internet Protocol), wherein VoIP involves utilizing, e.g., SIP as a call control protocol. The SIP server transmits and receives an SIP message, and thus establishes and disconnects a session with the wireless IP terminal.

By the way, the IP telephony service is a service for transmitting and receiving data of which a realtime property of voice information etc is required, and hence it is an important problem to actualize QoS (Quality of Service). For solving this problem, a communication system is proposed, wherein the SIP server is installed with a priority communication control function, or a priority communication control server installed with the priority communication control function is provided separately from the SIP server (refer to the Patent document "Japanese Patent Application Laid-Open Publication No.2005-80157"). The priority communication control function implements the control so as to manage the SIP message and to preferentially wirelessly transmit the packet related to the session established through this SIP message.

Further, the conventional system might have a case of installing a device called a wireless LAN switch for actualizing the QoS. The wireless LAN switch, which has a predetermined number of subordinate APs within the system, controls the respective subordinate APs and manages and controls the wireless IP terminals connected to the APs. This configuration enables the wireless IP terminals to continue to be provided with the IP telephony service seamlessly even in such a case that the wireless IP terminals move between the APs while being provided with the IP telephony service.

The conventional system described above is, however, needs to do special setting etc for other existing devices in order to have the priority communication control function or provide the wireless LAN switch. For instance, in the case of newly installing the wireless LAN switch, it is required that the setting in the respective existing routers be changed so as to route each of the packets addressed to the wireless IP terminals connected to the respective APs toward the wireless LAN switch.

Moreover, the installation of the priority communication control function needs to modify the existing SIP server for this purpose. Also in the case of newly providing the priority communication control server installed with the priority communication control function, the SIP server needs modifying in order to enable the priority communication control server and the existing SIP server to be linked with each other. A tremendous labor is required for modifying and rearranging this type of existing equipment, and a considerable period of time is taken for resuming operations at the network system.

### SUMMARY OF THE INVENTION

It is an object of the present invention to provide a communication system, and a management device and a relay device used for this communication system, which facilitate installation into the existing network and improve the quality of service of the communications.

The present invention adopts the following configurations in order to solve the problems. Namely, the present invention relates to a communication system configured by connecting a relay device performing wireless communications with a terminal, a management device managing the relay device and a server to each other via an IP network, the relay device comprising a packet generating means generating an encapsulated packet containing, as its payload, a packet used regarding a predetermined protocol in received packets, and a transferring means transferring the encapsulated packet to the management device, the management device comprising a receiving means receiving the encapsulated packet transmitted from the relay device, and a transmitting means transmitting a predetermined encapsulated packet in the encapsulated packets received by the receiving means back to the relay device.

According to the present invention, only the packet used regarding the predetermined protocol in the packets received by the relay device is encapsulated (a further packet containing this received packet as its payload is generated), and is then transmitted to the management device. The predetermined protocol is, e.g., SIP and H.323. Then, the predetermined encapsulated packet in the encapsulated packets received by the management device is transmitted back to the relay device.

With this configuration, according to the present invention, it follows that the predetermined packet in the packets received by the relay device invariably passes through the management device. Accordingly, for example, if the management device is installed with the priority communication control function corresponding to the predetermined packet relayed to the management device itself, the quality of the communication service provided in the communication system according to the present invention can be improved.

Further, the relay device may further comprise a priority table registering a communication identifier for specifying a session that is preferentially wirelessly transmitted in the wireless communications with the terminal, and a wireless transmitting means preferentially wirelessly transmitting a packet contained as a payload of the encapsulated packet transmitted back from the management device based on the priority table, and the management device may further comprise a notifying means notifying the relay device that the communication identifier set in the packet contained as the payload of the encapsulated packet received by the receiving means is to be registered in the priority table of the relay device.

Herein, the communication identifier for specifying the session is exemplified such as IP addresses, port numbers, etc of both of the terminals between which the session is established. According to the present invention, the priority table of the relay device is updated by the notifying means of the management device, and therefore the relay device may simply judge the packet accepted for the priority communication based on this priority table.

Still further, the relay device may further comprise a setting means setting loop-back information in the encapsulated packet if the packet contained as the payload of the encapsulated packet by the packet generating means, is a packet transmitted to the terminal as destination from the server, and the transmitting means of the management device may transmit the packet back to the relay device if the loop-back information is set in the encapsulated packet received.

With this configuration, the packet used regarding the predetermined protocol in the packets transmitted from the server can be made to pass through the management device. Hence, in the case of actualizing the priority communication control in the present communication system, the management device can mange this type of control batchwise.

Moreover, the server may simply transmit and receive the packet by the function as conventionally used irrespective of an existence of this management device. Therefore, on the occasion of installing the management device that implements the priority communication control etc, the introduction of the management device into the existing system is facilitated because of having no necessity of modifying the server.

Yet further, the setting means of the relay device does not set the loop-back information in the encapsulated packet if the packet contained as the payload of the encapsulated packet by the packet generating means is a packet wirelessly transmitted to the server as its destination from the terminal, and the transmitting means of the management device may transmit the packet contained as the payload of the encapsulated packet to the IP network if the loop-back information is not set in the encapsulated packet received.

With this configuration, the packet wirelessly transmitted from the terminal can be delivered to the server as its destination while being relayed to the management device. The management device refers to the loop-back information and can thus determine whether the packet should be transmitted back to the relay device or the packet obtained by the decapsulation (by extracting the packet contained as the payload of the encapsulated packet) should be transmitted to the server.

It should be noted that the present invention may also be a management device configuring the communication system, and may further be a relay device. Yet further, the present invention may also be a program making each of the devices configuring the communication system actualize any of the functions included in the respective devices. Moreover, the present invention may also be a readable-by-computer storage medium recorded with such a program.

According to the present invention, it is possible to provide the communication system, and the management device and the relay device used for this communication system, which facilitate installation into the existing network and improve the quality of service of the communications.

### BRIEF DESCRIPTION OF THE DRAWINGS

FIG. 1 is a diagram showing a network architecture of a VoIP system in the present embodiment;
FIG. 2 is a diagram showing a functional configuration of an access point;
FIG. 3 is a diagram showing a priority communication table;
FIG. 4 is a conceptual diagram showing how an SIP packet is encapsulated;
FIG. 5 is a diagram showing a functional configuration of an access point manager;
FIG. 6 is a diagram showing an access point management table;
FIG. 7 is a conceptual diagram showing a relay method of the access point manager;
FIG. 8A is a sequence diagram showing an operational example (when performing a call connection) of the VoIP system in the present embodiment;
FIG. 8B is a sequence diagram showing an operational example (when performing the call connection) of the VoIP system in the present embodiment; and
FIG. 9 is a sequence diagram showing an operational example (when disconnecting the call) of the VoIP system in the present embodiment.

### DESCRIPTION OF THE PREFERRED EMBODIMENTS

### [Embodiment]

A VoIP system in an embodiment of the present invention will hereinafter be described with reference to the drawings. It should be noted that a configuration in the following embodiment is an exemplification, and the present invention is not limited to the configuration in the embodiment.

### [System Architecture]

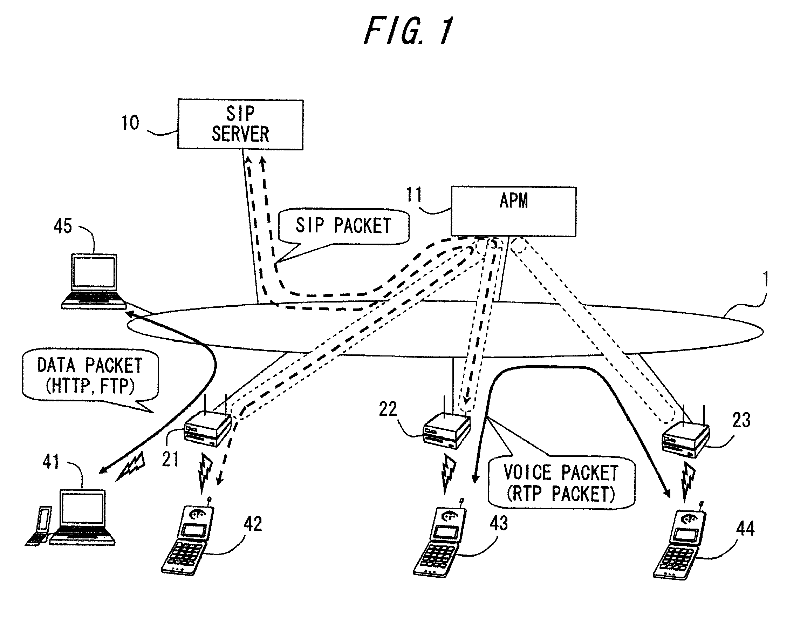

The VoIP system in the embodiment of the present invention will be explained. To begin with, a network architecture of the VoIP system in the present embodiment will be described with reference to FIG. 1. FIG. 1 is a view showing an example of the network architecture of the VoIP system in the embodiment of the present invention.

The VoIP system in the present embodiment is configured by connecting an SIP server 10, an access point manager (which will hereinafter be abbreviated to APM) 11 and access points (which will hereinafter be abbreviated to APs) 21, 22 and 23 with each other via an IP network 1. Each of wireless IP terminals 41, 42, 43 and 44 connects to the present system by performing wireless communications with any one of the APs 21, 22 and 23 each covering a wireless communication area where the wireless IP terminal exists, and is thus provided with an IP telephone service etc from the present system. Further, a wired IP terminal 45 having none of the wireless communication function connects via a cable to the IP network 1 and can be thus provided with the same services.

Each of the devices configuring the present system has a unique IP address. Through this IP address, IP packets based on SIP defined as a signaling protocol, RTP (Real-time Transport Protocol) for transferring voice information, etc, are transmitted and received, thereby actualizing VoIP. It is to be noted that the present invention does not change the standardized protocols such as SIP and RTP utilized in VoIP. Further, the present embodiment exemplifies SIP as the signaling protocol utilized in VoIP, however, H.323 or the like other than SIP may also be available.

Each of the devices configuring the present system will be explained.

The SIP server 10 has a function as a general type of SIP server. To be specific, the SIP server 10 manages an updated IP address, updated location information, etc of each terminal, then accepts a service request from the terminal, and sends the present IP address of the terminal becoming a communication destination back to the requester terminal. Moreover, the SIP server 10, when the terminal serving as a call connection destination of the service request is connected to a network outside the network administered by the SIP server 10 itself, transfers the service request to an SIP server on this external network. Moreover, the SIP server 10 may have functions such as a communication band management function and an accounting management function. Further, the SIP server 10 may perform a function as a DHCP (Dynamic Host Configuration Protocol) server.

The wireless IP terminals 41, 42, 43 and 44 each have an IP telephony function, an IP communication function, a wireless communication function, etc. The wireless IP terminals 41, 42, 43 and 44 each have the same functions required, and are therefore expressed with their notational numerals being omitted except a case of having a necessity for particular distinction therebetween in the following description. Furthermore, in the following description, the wireless IP terminal might simply be expressed as a terminal. The wireless communication function performs communication control pursuant to the standardized rule for the wireless LAN as defined by, e.g., IEEE802.11 (covering the wireless local area network (WLAN) technology) etc. The wireless IP terminal, through this function, performs the wireless communications with any one of the APs 21, 22 and 23, which covers a location as a communication area corresponding to where this wireless IP terminal exists, thereby connecting to the present system. The wired IP terminal 45 has the same functions required as the wireless IP terminal has, except having no wireless communication function.

The IP telephony function and the IP communication function implement access control pursuant to the standards of VoIP. These functions involve using SIP packets and RTP packets. Further, these functions implement priority communication control that distinguishes in terms of priority level between the communications utilized for the IP telephones etc and the communications other than this type of communications.

### <Access Point (AP)>

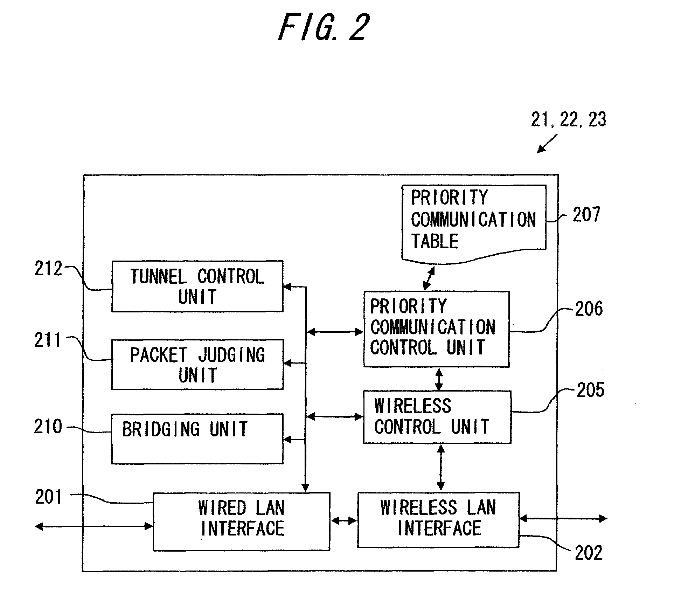

The APs 21, 22 and 23 each have the same functions needed, and are therefore expressed with their notational numerals being omitted except a case of having a necessity for particular distinction therebetween in the following description. The AP transmits and receives the IP packet to and from the terminal through the wireless communications, and transfers the wirelessly-received IP packet to the IP network 1 connected by the cable. Further, the AP, when receiving the IP packet addressed to the terminal connecting to the AP itself from the SIP server 10 or the APM 11 via the IP network 1, transfers the IP packet to this terminal through the wireless communications. A functional configuration of the AP will hereinafter be described with reference to FIG. 2. FIG. 2 is a diagram showing the functional configuration of the access point.

The AP, as illustrated in FIG. 2, includes a wired LAN interface 201, a wireless LAN interface 202, a wireless control unit 205, a priority communication control unit 206, a priority communication tab7..e 207, a bridging unit 210, a packet judging unit 211, a tunnel control unit 212, etc. The AP actualizes these function units by, as a hardware configuration, a CPU (Central Processing Unit), a memory, an input/output interface (unillustrated) and so on.

The wired LAN interface 201 is connected to the IP network 1 and thereby actualizes a wired communication system defined by IEEE802.3 etc. The wireless LAN interface 202 actualizes a wireless communication system defined by IEEE802.1.I etc. The wired LAN interface 201 and the wireless LAN interface 202 mutually exchange received data or transmission data.

The wireless control unit 205 controls the wireless communications between the terminal and the AP. The wireless control unit 205 transmits predetermined signals (IP packet) by use of the wireless LAN interface 202 in accordance with an instruction given from the priority communication control unit 206. Further, the wireless control unit 205 processes the data received via the wireless LAN interface and sent from the terminal, and, as the necessity may arise, sends the data (IP packet) to the wired LAN interface 201. The wireless control unit 205, when detecting that the terminal is connected to the self-device by wireless, instructs the wired LAN interface 201 to transmit a connection information registration message to the APM 11. This connection information registration message is a message for notifying the APM 11 of a connecting state between the AP and the terminal connected to the AP. The connection information registration message may involve utilizing a message based on SNMP (Simple Network Management Protocol) and may also involve utilizing a special communication message. Moreover, the connection information registration message may contain a hardware address of the terminal in addition to the IP address.

The priority communication control unit 206 conducts the priority communication control of the IP packets transmitted and received to and from the terminal. For example, a priority communication system based on IEEE802.11e is used for this priority communication control. This priority communication system is categorized into EDCA (Enhanced Distributed Channel Access) that implements the control of preferentially sending a frame having a high priority level, HCCA (Hybrid Coordination Function Controlled Channel Access) that allocates a special band to the frame having the high priority level, and so on. The present embodiment exemplifies a case of using the HCCA system in these systems. The present invention does not, however, limit these priority communication systems.

The priority communication control unit 206 judges a IP packet, which should be transmitted by wireless, by use of a communication band (which will hereinafter be referred to as a priority communication resource) reserved for the priority communications in the IP packets that are transmitted from the wireless LAN interface 202 by wireless. The priority communication control unit 206 utilizes the priority communication table 207, which will be explained later on, in order to make this judgment. To be specific, the priority communication control unit 206, in the case of receiving a band reservation message for the priority communications from the packet judging unit 211, refers to the priority communication table 207, thereby checking whether or not there is a free priority communication resource, and, if there is an empty record, temporarily registers session information contained in the band reservation message. Moreover, the priority communication control unit 206, in the case of receiving an information registration message, sets in a determined status the session information contained in this message and also temporarily registered earlier in the priority communication table 207. Further, the priority communication control unit 206, in the case of receiving an information delete message, deletes a record associated with this session from the priority communication table 207. The band reservation message, the information registration message and the information delete message are defined as the predetermined messages necessary for the present system, and these messages may involve utilizing messages based on SNMP (Simple Network Management Protocol) and may also involve utilizing special communication messages.

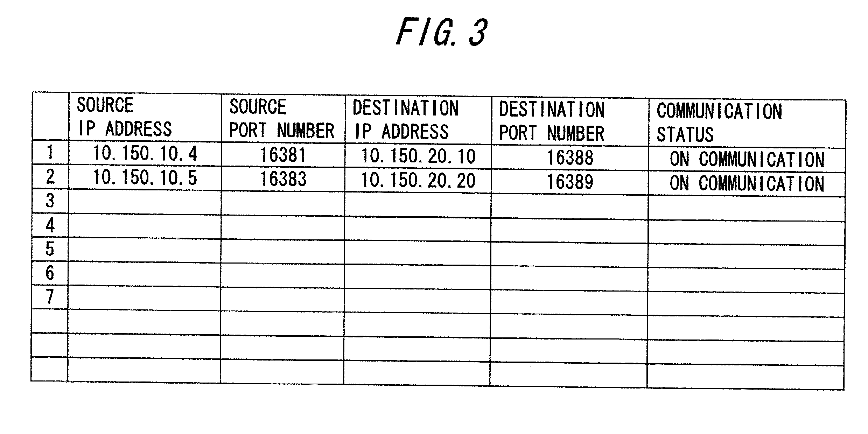

In the priority communication table 207, the record is set for every session that should perform the priority communications, and is also set, e.g., for every call connection between the terminals. FIG. 3 is a diagram showing the priority communication table. Set, as shown in FIG. 3, in the priority communication table are an IP address (source IP address field) of a caller terminal, a port number (source port number field) utilized for a target session by the caller terminal, an IP address (destination IP address field) of a callee terminal, a port number (destination port number field) utilized for the target session by the callee terminal, and a communication status according to every session. The communication status of the session is set in the communication status field among these fields, wherein [not-connected] is set in if a status where the session is not yet established though the band is reserved, and [on-communication] is set in if the session is established.

The priority communication control unit 206 checks, based on the destination information and the source information of the should-be-transmitted IP packet, whether this IP packet is related to the session set in the priority communication table 207. The priority communication control unit 206, when judging that this IP packet is related to the session set in the priority communication table 207, instructs the wireless control unit 205 to wirelessly transmit this IP packet through the priority communication resource.

Further, a maximum set-enabled record count is determined in the priority communication table 207. This maximum record count can be determined corresponding to a size of such a communication band that a maximum session count allowable as the priority communications are reserved as the priority communication resources, and can be therefore determined to be the same as this maximum session count. The priority communication control unit 206 checks whether the record count set in the priority communication table 207 is the maximum record count or not, thereby checking whether there is a free priority communication resource or not.

The packet judging unit 211 judges a packet type of the packet received by the wireless LAN interface 202 and a packet type of the packet received by the wired LAN interface 201. The packet type is judged from, e.g., the port number. Specifically, the packet judging unit 211 judges whether the target packet is an encapsulated packet or an SIP packet or a packet other than the SIP packet or a predetermined packet necessary for the present system. Note that the encapsulation of the packet will be explained later on.

The packet judging unit 211, when judging that the packet received by the wireless LAN interface 202 is the SIP packet, instructs the tunnel control unit 212 to encapsulate the SIP packet and to transfer the encapsulated packet to the APM 11 that manages the self-AP. Information on the APM 11 that manages the self-AP is previously retained in the memory etc.

Further, the packet judging unit 211 judges whether or not the packet received by the wired LAN interface 201 is the encapsulated packet. The packet judging unit 211 judges, from knowing whether, e.g., the port number set in this packet is coincident with the predetermined port number or not, whether this packet is the encapsulated packet or not.

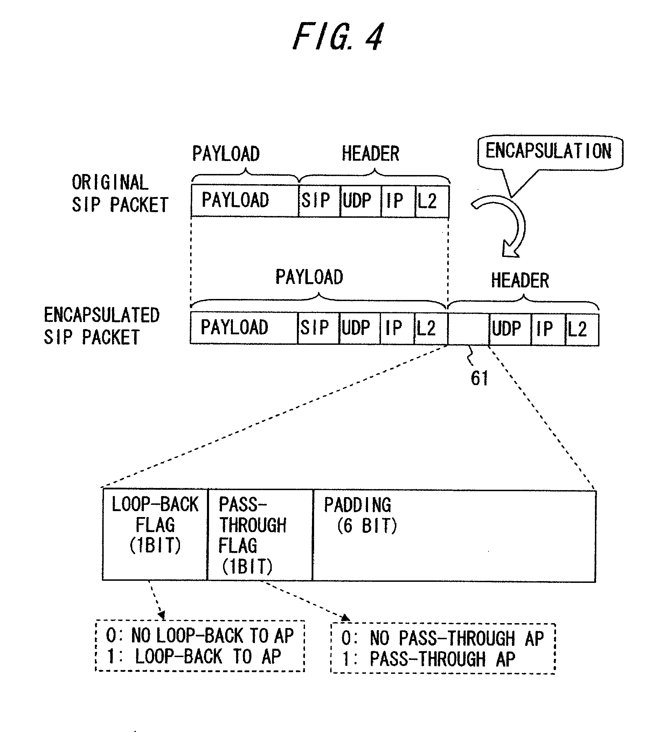

FIG. 4 is a conceptual diagram showing how the SIP packet is encapsulated. The [encapsulation of the packet] expressed herein connotes such a process that a header field and a payload field, which assemble the packet (an [original SIP packet] illustrated in FIG. 4) are organized together into a payload field, and a new packet is assembled by attaching a header field thereto. The thus-assembled packet is a [encapsulated SIP packet] in FIG. 4. In addition to normal pieces of information such as an IP header and a UDP (User Datagram Protocol) header, encapsulation information 61 is set in the header field for the encapsulation. Set in the encapsulation information 61 are a loop-back flag showing whether the packet is looped back to the AP or not, a pass-through flag showing the packet passes through the AP or not, and so forth.

The packet judging unit 211, when the packet is the encapsulated packet, refers to the pass-through flag of the encapsulation information 61. If [1: (which represents passing through the AP)] is set in this pass-through flag, the packet judging unit 211 instructs the tunnel control unit 212 to decapsulate the packet and to transmit the decapsulated packet by wireless.

Moreover, the packet judging unit 211, when the packet is not the encapsulated packet ([the original SIP packet] shown in FIG. 4), judges whether or not this packet is the SIP packet. The packet judging unit 211, when the packet is the SIP packet, instructs the tunnel control unit 212 to encapsulate the SIP packet and to transfer the encapsulated packet to the APM 11.

The packet judging unit 211, when judging that the packet is the predetermined packet necessary for the present system, transfers this packet to the priority communication control unit 206. The packet judging unit 211, when judging that the packet is a packet other than the SIP packet, notifies the bridging unit 210 of this purport.

The bridging unit 210 executes, in accordance with the notification from the packet judging unit 211, transferring control at a level of the data link layer (Layer2) with respect to the packet other than the SIP packet. To be specific, if the destination of the packet coming from the wireless LAN interface 202 is a device directed to the IP network 1, the bridging unit 210 sends this packet toward the IP network 1 from the wired LAN interface 201. On the other hand, if the destination of the packet coming from the wired LAN interface 201 is the terminal performing the communications with the present device, the bridging unit 210 instructs the wireless control unit 205 to send the packet from the wireless LAN interface 202.

The tunnel control unit 212, upon the instruction given from the packet judging unit 211, encapsulates the target SIP packet or decapsulates the target IP packet. In the case of the encapsulation, a further IP packet is assembled in a way that uses the original SIP packet as a payload field. At this time, the tunnel control unit 212 sets the encapsulation information 61 in the header field for the encapsulation. The tunnel control unit 212 sets, based on the instruction given from the packet judging unit 211, [1] in the loop-back flag of the encapsulation information 61 if required to transfer the packet received from the wired LAN interface 201 to the APM 11. The tunnel control unit 212 sets, based on the instruction given from the packet judging unit 211, [0] in the loop-back flag of the encapsulation information 61 if required to transfer the packet received from the wireless LAN interface 202 to the APM 11. Further, the tunnel control unit 212 sets the pre-retained address of the APM 11 in the destination address field of the header field of the encapsulated packet and also sets the number specifying the encapsulated packet in the port number field. The tunnel control unit 212 transmits the thus-set packet from the wired LAN interface 201.

On the other hand, the tunnel control unit 212, in the case of decapsulating the target packet, extracts the SIP packet (original packet) set as the payload field of this packet. The tunnel control unit 212 instructs the wireless control unit 205 to transmit the extracted SIP packet from the wireless LAN interface 202 by wireless.

### <Access Point Manager (APM)>

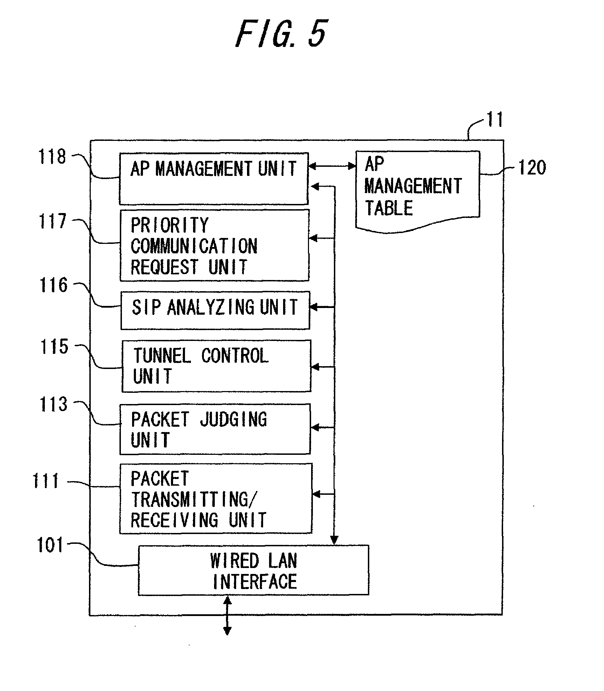

The APM 11 manages a predetermined number of APs configuring the VoIP system in the present embodiment. Accordingly, the single APM 11 is provided in the network architecture according to the present embodiment illustrated in FIG. 1, however, a configuration using a plurality of APMs 11 is also available. The APM 11 receives the packet into which the SIP packet is encapsulated from the AP under the management and analyzes the SIP packet (payload field), thereby managing the connecting relationship between the AP and the terminal and giving a priority communication request to the AP. A functional configuration of the APM 11 will hereinafter be explained with reference to FIG. 5. FIG. 5 is a diagram showing the functional configuration of the access point manager.

The APM 11 has, as illustrated in FIG. 5, a wired LAN interface 101, a packet transmitting/receiving unit 111, a packet judging unit 113, a tunnel control unit 115, an SIP analyzing unit 116, a priority communication request unit 117, an access point (AP) management unit 118, an access point (AP) management table 120, and so on. The APM 11 actualizes these function units by, as a hardware configuration, a CPU (Central Processing Unit), a memory, an input/output interface (unillustrated) and so on.

The wired LAN interface 101 is connected to the IP network 1 and actualizes a wired communication system defined by IEEE802.3 etc. The packet transmitting/receiving unit 111 controls how the IP packets are transmitted and received via the wired LAN interface 101.

The packet judging unit 113 judges whether the IP packet received by the wired LAN interface 101 is an encapsulated packet or a packet, for registering the connection information, sent from the AP. The packet judging unit 113 judges, from knowing whether, e.g., the port number set in the packet is coincident with the predetermined port number as the system, whether the packet is encapsulated or not. The packet judging unit 113, if the packet is the encapsulated packet, instructs the tunnel control unit 115 to transfer the SIP packet (original packet) extracted by decapsulating the packet (encapsulated packet) to the SIP analyzing unit 116. Further, the packet judging unit 113, when judging that the packet is a connection information registration message from the AP, transfers this packet to the AP management unit 118.

Furthermore, the packet judging unit 113, upon receiving process completion notification from the SIP analyzing unit 116, refers to the loop-back flag of the encapsulation information 61 of the encapsulated IP packet. If [1: (loop-back to the AP)] is set in this loop-back flag, the packet judging unit 113 instructs the tunnel control unit 115 to loop back the encapsulated packet to the source AP. Moreover, the packet judging unit 113, if [0: (no loop-back to the AP)] is set in the loop-back flag of the encapsulation information 61, instructs the tunnel control unit 115 to transmit the SIP packet contained in the encapsulated packet to the SIP server 10.

The tunnel control unit 115, in response to the instruction of the packet judging unit 113, decapsulates the encapsulated packet and transfers the extracted SIP packet to the SIP analyzing unit 116. Further, the tunnel control unit 115, if instructed to loop back the packet to the AP, changes the destination address of the encapsulated packet to the source AP address of the original packet, and sets [1: (pass-through the AP)] in the pass-through flag of the encapsulation information 61. The tunnel control unit 115 instructs the packet transmitting/receiving unit 111 to send the thus-set IP packet to the IP network 1. Moreover, if instructed to transmit the packet to the SIP server 10, the tunnel control unit 115 instructs the packet control unit 115 to send the SIP packet (original packet) extracted by decapsulating the encapsulated IP packet to the IP network 1.

The SIP analyzing unit 116 analyzes the SIP packet transferred from the packet judging unit 113. The SIP analyzing unit 116, when judging that the SIP packet is an INVITE message or an OK message (status 200) (which will hereinafter be referred to as a 2000K message) transmitted from the terminal to the SIP server 10, transfers this packet to the priority communication request unit 117.

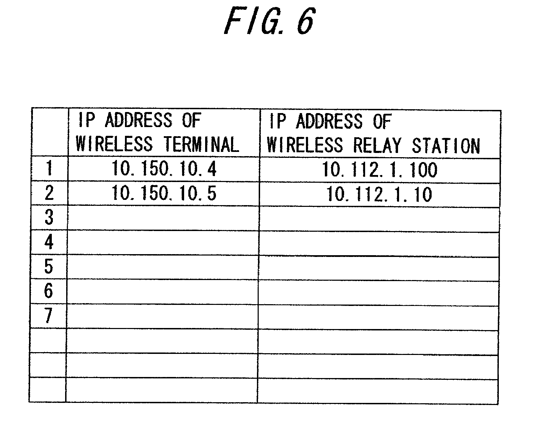

The AP management unit 118, when judging that the packet transferred from the packet judging unit 113 is the connection information registration message, updates the AP management table 120 which will be explained later on. The AP management unit 118 registers, in the AP management table 120, the terminates IP address contained in the connection information registration message and the IP address of the AP as the sender of this packet in a way that associates these IP addresses with each other. FIG. 6 is a diagram showing the AP management table 120. The IP address of the terminal and the IP address of the AP accepting the connection of this terminal are so registered as to be associated with each other in the AP management table 120. The APM 11 can know which terminal and which AP are connected to each other by referring to this AP management table 120.

The priority communication request unit 117, when receiving the INVITE message from the SIP analyzing unit 116, instructs the packet transmitting/receiving unit to transmit the band reservation message to each of the APs to which the respective terminals becoming the call connection target terminals contained in the INVITE message are connected. Further, the priority communication request unit 117, when receiving the 200OK message from the SIP analyzing unit 116, instructs the packet transmitting/receiving unit to transmit the information registration message or the information delete message to the respective APs. The information registration message is a message for registering the target session in the priority communication table 207, wherein the IP addresses and the port numbers of the call connection target terminals contained in the INVITE message are set in this information registration message. The information delete message is a message for making a request for deleting the sessions registered in the priority communication table 207, wherein the IP addresses and the port numbers of the call connection target terminals contained in the 2000K message are set in this information delete message. Note that the address information etc about the destination AP is determined by referring to the AP management table 120 on the basis of the IP address of the terminal.

### [Operational Example]

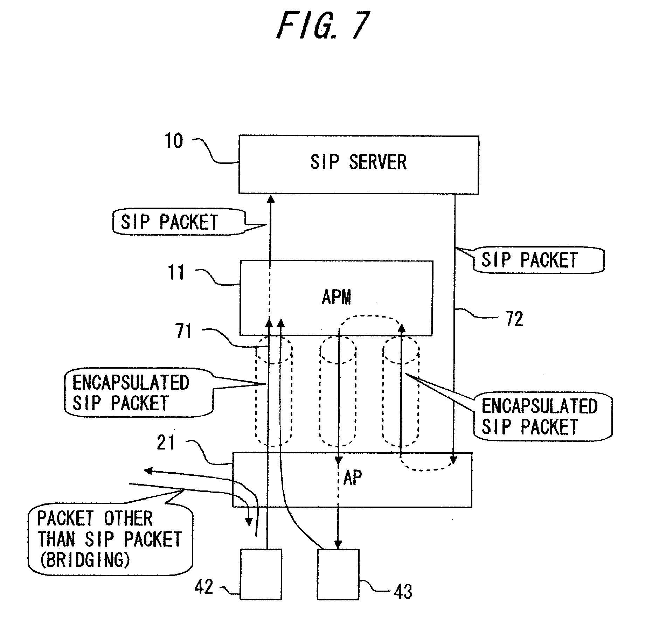

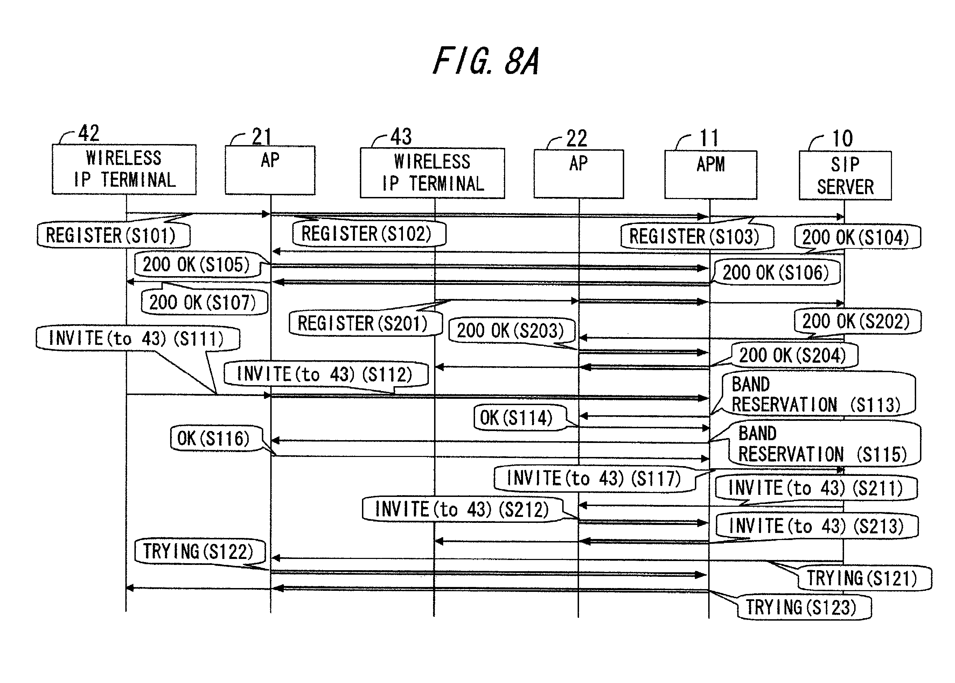

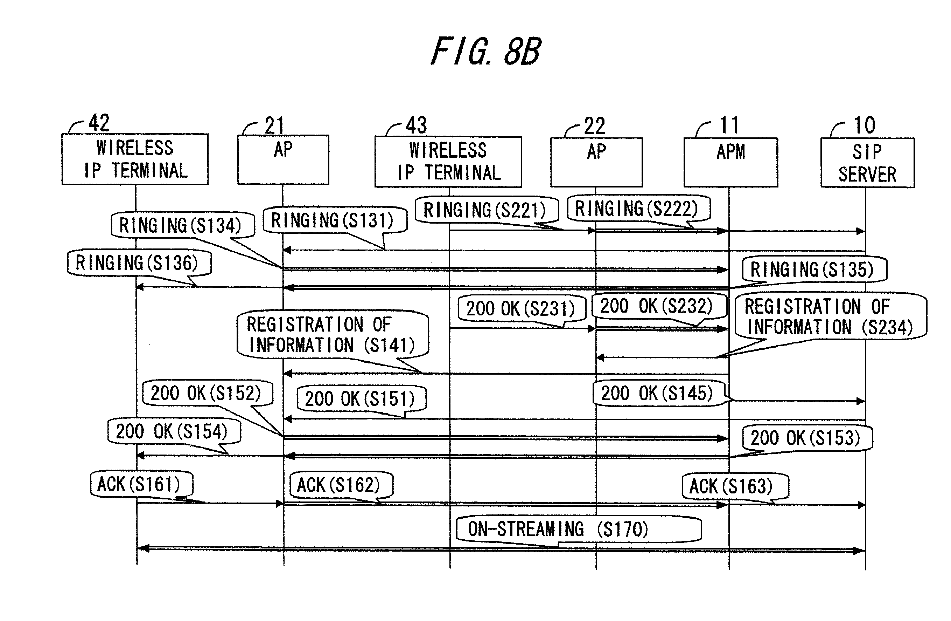

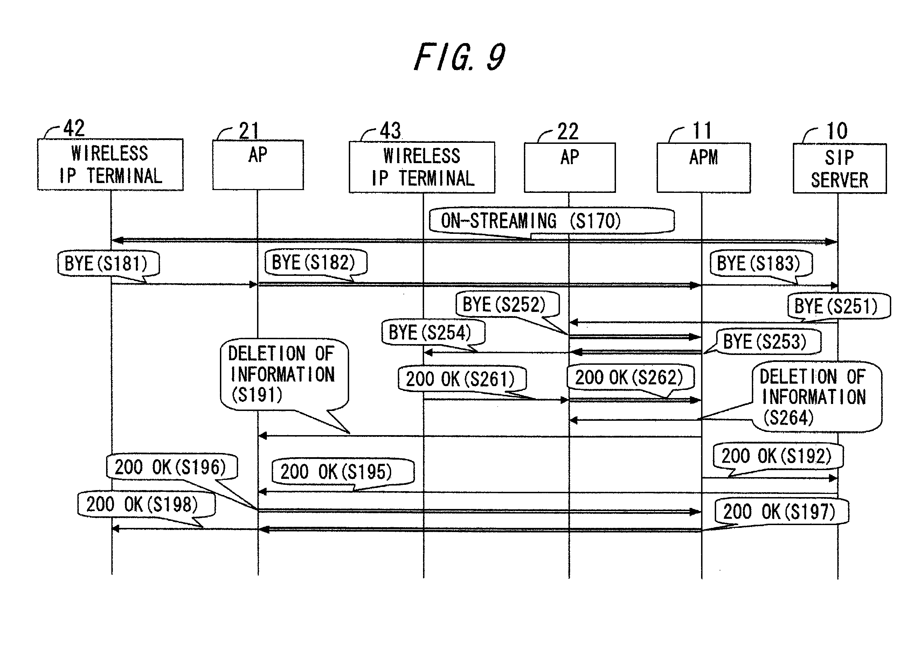

Next, an operational example of the VoIP system in the present embodiment will hereinafter be described with reference to FIGS. 7, 8A, 8B and 9. FIG. 7 is a conceptual diagram showing a bypass relay to the APM. FIGS. 8A and 8B are diagrams each showing a communication sequence of the VoIP system in the present embodiment when establishing the call connection. FIG. 9 is a diagram showing a communication sequence of the VoIP system in the present embodiment when disconnecting the call.

To begin with, a relay method to the APM in the VoIP system in the present embodiment will hereinafter be described with reference to FIG. 7. The relay method to the APM in the present embodiment is carried out by the AP and the APM 11 with respect to only the SIP packet. Other types of packets are, in the same way as by the normal method, subjected to bridging and routing. The relay method to the APM is roughly categorized into two relay methods such as a normal relay and a bypass relay.

The AP conducts the normal-relay of the SIP packet received through the wireless communications from a terminal 42 or 43 (as indicated by a reference numeral 71 in FIG. 7). To be specific, the AP, when judging that the packet received from the terminal is the SIP packet, encapsulates this SIP packet. The AP sets an IP address of the APM 11 in the destination address field of the encapsulated packet, and sets [0: (no loop-back to the AP)] in the loop-back flag of the encapsulation information 61. The thus-set packet reaches the APM 11 via the IP network 1. The APM 11 judges that the received packet is the encapsulated packet, and, when confirming that [0: (no loop-back to the AP)] is set in the loop-back flag of the encapsulation information 61, sends the decapsulated SIP packet as it is to the IP network 1. This SIP packet undergoes setting the IP address of the SIP server 10 as the destination address and is therefore received by the SIP server 10.

On the other hand, the SIP packet transmitted to the terminal from the SIP server 10 is routed through and reaches the AP to which the terminal is connected by wireless. The AP, when receiving this SIP packet, performs the bypass relay of the SIP packet to the APM 11 (as indicated by the reference numeral 72 in FIG. 7). Specifically, the AP encapsulates the SIP packet. The AP sets the IP address of the APM 11 in the destination address field of this encapsulated packet, and sets [1: (loop-back to the AP)] in the loop-back flag of the encapsulation information 61. The thus-set packet reaches the APM 11 via the IP network 1. The APM 11 judges that the received packet is the encapsulated packet, and, when confirming that [1: (loop-back to the AP)] is set in the loop-back flag of the encapsulation information 61, sends the encapsulated packet to the AP after executing a predetermined process. At this time, the APM 11 changes the destination address of the encapsulated packet to the address of the AP as the sender of the original packet, and sets [1: (pass-through the AP)] in the pass-through flag of the encapsulation information 61. The thus-set packet, when sent to the IP network 1, contains the AP' s IP address set as the destination address and is therefore received by the AP. The AP, when confirming that this packet is the encapsulated packet and [1: (pass-through the AP)] is set in the pass-through flag of the encapsulation information 61, decapsulates this packet and transmits the extracted SIP packet by wireless.

Thus, the present system can actualize improvement of the quality of service (QoS) owing to the priority communication control of the APM by having the relay method to this APM without particularly modifying the function of the existing SIP server.

Next, an example of an operation sequence of the VoIP system in the present embodiment will hereinafter be described with reference to FIGS. 8A and 8B. FIGS. 8A and 8B show an operational example of a case of establishing the call connection from the terminal 42 to the terminal 43 in the network architecture illustrated in FIG. 1.

The terminal 42 searches for the wireless-communication-enabled access point by operating the wireless control unit 205 and the wireless LAN interface 202, and connects to the access point (AP 21) through the wireless communications. The AP 21, when detecting establishment of the wireless connection with the terminal 42, sends to the APM 11 the connection information registration message for notifying the APM 11 of the IP address of the terminal 42 and of the IP address of the AP 21 itself. The APM 11, upon receiving this connection information registration message, registers in the AP management table 120 the terminal's IP address and the AP's IP address contained this message in a way that associates these addresses with each other. With this operation, it follows that the AP management table 120 is registered with the associated relationship between the information on the terminal and the information on the AP to which this terminal is connected. Similarly, the terminal 43 is connected to the AP 22 by wireless, and the connecting relationship with the AP 22 is registered in the AP management table 120.

Thereafter, the terminal 42 transmits a REGISTER message to the SIP server 10 via the AP 21 (S101). This REGISTER message is an SIP message for registering in the SIP server 10 the information necessary for the terminal to function as the VoIP terminal, and contains, e.g., the IP address, the port number, a call-up identifier (a telephone number, a user ID, CODEC information), etc of the terminal.

The AP 21, when judging that the received data is the wirelessly-received data (the wireless control unit 205) and is also the SIP-based REGISTER message (the packet judging unit 211), encapsulates this REGISTER message (the tunnel control unit 212), and transfers the encapsulated message to the APM 11 (S102) . A dual arrow line shown in the Figures represents that the encapsulated packet is transmitted. [0: (no loop-back to the AP)] is set in the loop-back flag of the encapsulation information 61 in this post-encapsulation IP packet.

The APM 11, when receiving the transferred packet, judges whether this packet is the encapsulated packet or not (the packet judging unit 113). This judgment involves utilizing, e.g., the port number set in the UDP header of this packet. The APM 11, when judging that this received IP packet is the encapsulated packet, checks the loop-back flag of the encapsulation information 61 of the encapsulated IP packet. The APM 11, when confirming that [0: (no loop-back to the AP)] is set in the loop-back flag, sends the REGISTER message obtained by decapsulating this packet to the IP network 1 (the tunnel control unit 115) (S103). This REGISTER message is transferred by IP routing to the SIP server 10 as its destination.

The SIP server 10 registers the terminal-related information contained in this REGISTER message. The SIP server 10, upon completing the registration, sends the 200OK message to the terminal 42 as the destination of this message (S104). The 200OK message is routed through as the SIP packet and reaches the AP 21.

The AP 21, when receiving this 200OK message, since this message is the data received via the cable, judges whether this packet is encapsulated or not (the tunnel control unit 212). The AP 21, when judging that this packet is not encapsulated, further judges the packet type of this packet (the packet judging unit 211). The AP 21, when judging that the packet type thereof is the SIP packet, since this packet is the packet received via the cable, encapsulates the 2000K message and thus transfers the encapsulated packet to the APM 11 (the tunnel control unit 212) (S105). This encapsulation involves setting [1: (loop-back to the AP)] in the loop-back flag of the encapsulation information 61.

The APM 11, when receiving the encapsulated packet, checks the loop-back flag of the encapsulation information 61 of this packet. The APM 11, when confirming that [1: (loop-back to the AP)] is set in the loop-back flag of the encapsulation information 61 of this packet, changes the destination of this encapsulated packet to the AP 21, and further sets [1: (pass-through the AP)] in the pass-through flag of the encapsulation information 61. The thus-setting-changed packet is transmitted to the AP 21 (S106).

The AP 21, when receiving this encapsulated packet, since the packet is the data received via the cable, judges whether this packet is encapsulated or not (the tunnel control unit 212). The AP 21, when judging that this packet is encapsulated, checks the pass-through flag of the encapsulation information 61. The AP 21 confirms that [1: (pass-through the AP)] is set in this pass-through flag, wirelessly transmits the 200OK message extracted by decapsulating this packet via the wireless LAN interface 202 (S107).

At this time, the terminal 43 completes, in the same way as by the terminal 42, the communication sequence from the information registration in the APM 11 and in the SIP server 10 by use of the REGISTER message (S201) to the reception of the 2000K message from the SIP server 10 (S202, S203, S204).

It is to be noted that the operational example described above has shown how the AP, when the terminal connects to the AP through wireless, operates to notify the APM 11 of the address information etc of this terminal and of the AP itself, however, the present invention does not restrict the registration timing. For instance, a scheme may be such that the connecting relationship between the terminal and the AP is registered in the AP management table 120 of the APM 11 in accordance with the REGISTER message sent from the terminal and is also registered when the APM 11 receives the INVITE message sent by the terminal, which will hereinafter be explained.

The terminal 42, on the occasion of establishing the call connection with the terminal 43, at first, wirelessly transmits the INVITE message to the SIP server 10 as its destination (5111). The INVITE message is an SIP message for establishing the session with the connection requester terminal, and contains the IP address, the port number, etc of the sender terminal 42 and the IP address, the port number, etc of the destination terminal 43.

The AP 21, when judging that the received data is the wirelessly-received data and is also the SIP-based INVITE message, encapsulates the INVITE message and transfers this message to the APM 11 (S112). [0: no loop-back to the AP] is set in the loop-back flag of the encapsulation information 61 of this encapsulated IP packet.

The APM 11, when judging that the received IP packet is the encapsulated packet, reads out the INVITE message in the encapsulated packet. The APM 11 extracts the caller information (the information about the terminal 42) and the callee information (the information about the terminal 43) from this INVITE message, and refers, based on these items of information, to the AP management table 120. The APM 11 sends the band reservation message to the AP 22 to which the callee terminal 43 is connected and also to the AP 21 to which the caller terminal 42 is connected (S113, S115). The band reservation messages may be set to be transmitted sequentially according to the terminals and also transmitted in parallel. Further, the message for making the band reservation may involve utilizing an SNMP-based message and also a special communication message.

The APs 21 and 22, when receiving the band reservation message, checks a free state of the priority communication resource (the priority communication control unit 206). Namely, the priority communication control unit 206 refers to the priority table 207 and thus checks whether there is a free priority communication resource or not. The priority communication control unit 206, if there is the free priority communication resource, writes the IP addresses and the port numbers of the terminals 42, 43, which are contained in the received band reservation message, in empty records of the priority table 207, and sets [not-connected] in the communication status field thereof. The APs 21 and 22, when the priority communication control unit 206 confirms that there is the free priority communication resource, respectively send the OK messages to the APM 11 (S114, S116). This OK message is a message showing a response to the band reservation message.

The APM 11, upon receiving the OK messages respectively, judges that the priority communication resource gets successfully reserved for the APs 21 and 22, and sends, to the IP network 1, the INVITE message extracted by decapsulating the IP packet received earlier (the tunnel control unit 115) (S117). The thus-sent INVITE message is transferred by IP routing to the SIP server 10 as its destination.

Note that even when at least one of the APs 21 and 22 notifies of the purport that there is no free priority communication resource, the INVITE message may also be sent to the IP network 1. In this case, the data are processed as a non priority communication between the access point that was unable to reserved the priority communication resource and the terminal. Conversely, when both of the APs 21 and 22 notify of the purport that there is no free priority communication resource, a message purporting that the establishment of the session gets unsuccessful, may also be sent back without sending the INVITE message.

The SIP server 10, when receiving this INVITE message, sends the INVITE message to the terminal 43 set in the callee information contained in this message (S211). This INVITE message is routed through as the SIP packet toward the AP 22.

The AP 22, upon receiving this INVITE message, since the message is the data received via the cable, judges whether or not this packet is encapsulated (the tunnel control unit 212). The AP 22, when judging that this packet is not encapsulated, further judges the packet type of this packet (the packet judging unit 211). The AP 22, when judging that the packet type is the SIP packet, since this packet is the packet received via the cable, encapsulates the INVITE message and transfers this encapsulated message to the APM 11 (the tunnel control unit 212) (S212). This encapsulation involves setting [1: (loop-back to the AP)] in the loop-back flag of the encapsulation information 61.

The APM 11, upon receiving the encapsulated IP packet, reads the INVITE message in the encapsulated packet. The APM 11 recognizes from the AP management table 120 that the access point to which to connect the terminal 43 serving as the destination of this INVITE message is the AP 22. The APM 11, when confirming that [1: (loop-back to the AP)] is set in the loop-back flag of the encapsulation information 61, changes the destination of the encapsulated packet to the AP 22, and further sets [1: (pass-through the AP)] in the pass-through flag of the encapsulation information 61. The thus-setting-changed IP packet is transmitted to the AP 22 (S213). This type of SIP message relay method corresponds to the bypass relay method described above.

**T**he AP 22, when receiving this encapsulated IP packet, since this packet is the data received via the cable, judges whether this packet is encapsulated or not. The AP 22, when judging that this packet is encapsulated and that [1: (pass-through the AP)] is set in the pass-through flag, wirelessly transmits the INVITE message extracted by decapsulating this packet from the wireless LAN interface 202. With this operation, the terminal 43 designated as the destination by the terminal 42 receives the INVITE message.

The SIP server 10 sends the INVITE message to the terminal 43 and, on the other hand, sends a TRYING message (status 100) to the terminal 42 defined as the sender of the INVITE message (S121). The TRYING message is an SIP message showing an on-try state of establishing the session. The TRYING message is bypass-relayed to the APM 11 by the AP 21 (S122, S123). The AP 21, when receiving the TRYING message that is encapsulated after being bypass-relayed, wirelessly transmits the TRYING message extracted by decapsulating this packet from the wireless LAN interface 202. With this operation, the terminal 42 receives the TRYING message.

The terminal 43 receiving the INVITE message notifies the user of being called up by a ringing tone etc and, meanwhile, wirelessly transmits a RINGING message (status 180) addressed to the SIP server 10 (S221). This RINGING message is an SIP message showing on-calling. The RINGING message is transferred to the APM 11 after being encapsulated by the AP 22 (S222) . The APM 11, upon receiving the encapsulated RINGING message, sends the RINGING message extracted by decapsulating this packet to the IP network 1. The RINGING message sent to the IP network 1 is, after being received by the SIP server 10, transferred to the destination, i.e., the terminal 42 defined as the caller (S131).

The transferred RINGING message is routed through and is, when received by the AP 21, bypass-relayed to the APM 11 by the AP 21 (S134, S135). The AP 21, when receiving the RINGING message encapsulated after being bypass-relayed, wirelessly transmits the RINGING message extracted by decapsulating this packet from the wireless LAN interface 202 (S136). With this operation, the terminal 42 becoming the caller receives the RINGING message and knows that the callee terminal 43 is being called up.

The terminal 43, in a case where the user answers to the ringing tone etc, executes the process for establishing the session and thereafter wirelessly transmits the 200OK message addressed to the SIP server 10 (S231) . The 200OK message is an SIP message showing that the user has answered to the ringing tone. This 200OK message is, after being encapsulated by the AP 22, transferred to the APM 11 (S232).

The APM 11, when receiving the encapsulated 200OK message and judging that this packet is the encapsulated packet, reads out the 200OK message from the encapsulated packet. The APM 11 refers to the AP management table 120 on the basis of the information about the caller terminal 42 and the information about the callee terminal 43 that are contained in this 2000K message. The APM 11 sends the information registration message respectively to the AP 22 to which the callee terminal 43 is connected and to the AP 21 to which the caller terminal 42 is connected (S234, S141). The information registration messages may be set to be transmitted sequentially according to the terminals and also transmitted in parallel.

The APs 21 and 22, receiving the information registration message, set [on-communication] in the communication status field of the session of which the reservation is registered earlier in the priority communication table 207 through the band reservation message. With this setting, it follows that hereafter the APs 21 and 22 wirelessly transmit the packets related to the session registered in the priority communication table 207 by use of the priority communication resource.

The APM 11, upon completing the transmission of the information registration message, sends the 2000K message extracted by decapsulating the encapsulated packet to the IP network 1 (S145). The 2000K message sent to the IP network 1 is, after being received by the SIP server 10, transferred to the destination, i.e., the terminal 42 as the caller (S151).

The transferred 2000K message is routed through and is, when received by the AP 21, bypass-relayed to the APM 11 by the AP 21 (Sl52, S153). The AP 21, when receiving the 2000K message encapsulated after being bypass-relayed, wirelessly transmits the 2000K message extracted by decapsulating this packet from the wireless LALV interface 202 (S154). The caller terminal 42 knows from receiving the 200OK message that the callee terminal 43 has answered, and executes the process for establishing the session with the terminal 43.

The terminal 42, upon completing the session establishing process, wirelessly transmits an ACK message to the destination, i.e., the SIP server 10 (S161). This ACK message is an SIP message showing that the establishment of the session is acknowledged. The ACK message is, after being encapsulated by the AP 21, transferred to the APM 11 (S162).

The APM 11, when receiving the encapsulated ACK message and judging that this packet is the encapsulated packet, sends the ACK message extracted by decapsulating the encapsulated packet to the IP network 1 (S163). The ACK message sent to the IP network 1 is received by the SIP server 10, thereby establishing the session between the terminal 42 and the terminal 43. Hereafter, the terminal 42 and the terminal 43 execute the streaming communications (conduct the IP telephoning) through the established session in a way that utilizes the priority communication resource (S170).

Finally, an example of an operation sequence of the VoIP system in the present embodiment will hereinafter be described with reference to FIG. 9. FIG. 9 shows an operational example in a case where the session is disconnected after conducting the streaming communications as described above.

If the session is disconnected during the IP telephoning, a BYE message is transmitted from one of the terminals. The BYE message is an SIP message representing termination of the session. The example in FIG. 9 is that the terminal 42 wirelessly transmits the BYE message to the destination, i.e., the SIP server 10 (S181). This BYE message is encapsulated by the AP 21 and is thereafter transferred to the APM 11 (S182).

The APM 11, when receiving the encapsulated BYE message and judging that this packet is the encapsulated packet, reads out the BYE message from the encapsulated packet. The APM 11 sends this BYE message to the IP network 1. The BYE message is received by the SIP server 10 as the destination. The SIP server 10 transmits the BYE message to the connecting destination terminal 43 becoming the BYE message target (S251). The BYE message addressed to the terminal 43 is routed through as the SIP packet and is received by the AP 22.

The AP 22 bypass-relays the BYE message to the APM 11 (S252, S253). The AP 22, upon receiving the BYE message encapsulated after being bypass-relayed, wirelessly transmits the BYE message extracted by decapsulating this packet from the wireless LAN interface 202 (S254). The terminal 43 knows from receiving the BYE message that the terminal 42 as a talking partner terminal requests the termination of the session, and executes a process for terminating the session.

The terminal 43, upon completing the session terminating process, wirelessly transmits the 2000K message defined as the SIP message representing consent of the termination of the session to the destination, i.e., the SIP server 10 (S261). This 200OK message is, after being encapsulated by the AP 22, forwarded to the APM 11 (S262).

The APM 11, when receiving this encapsulated 2000K message and judging that this packet is the encapsulated packet, reads out the 2000K message from the encapsulated packet. The APM 11 refers to the AP management table 120 on the basis of the information about the caller terminal 42 and the information about the callee terminal 43 that are contained in this 2COOK message. The APM 11 transmits the information delete message respectively to the AP 22 to which the callee terminal 43 is connected and to the AP 21 to which the caller terminal 42 is connected (S264, S191). The information delete messages may be set to be transmitted sequentially according to the terminals and also transmitted in parallel.

The APs 21 and 22 receiving the information delete message delete, based on the terminal address information contained in the message, the sessions associated with the address information from the priority communication table 207.

The APM 11, upon completing the transmission of the information delete message, sends the 2000K message extracted by decapsulating the encapsulated packet to the IP network 1 (S192). The 200OK message sent to the IP network 1 is, after being received by the SIP server 10, transmitted to the destination, i.e., the terminal 42 (S195).

The transmitted 200OK message is routed through and is, when received by the AP 21, bypass-relayed to the APM 11 by the AP 21 (S196, S197). The AP 21, upon receiving the 200OK message encapsulated after being bypass-relayed, wirelessly transmits the 2000K message extracted by decapsulating this packet from the wireless LAN interface 202 (S198). The caller terminal 42 knows from receiving the 2000K message that the talking partner terminal 43 has terminated the session, and executes the process for terminating the session with the terminal 43. The session between the terminal 42 and the terminal 43 is thereby terminated.

Note that an operational example in the case of changing the AP to which the terminal is wirelessly connected as the terminal moves, is not herein explained, however, it is because this can be actualized without executing the normal relay and the bypass relay between the AP and the APM 11. In such a case, the AP management table 120 of the APM 11 may be automatically updated by transferring and receiving a special message etc between the AP and the APM 11.

Further, the operational example given above has shown the operation, wherein the SIP message (e.g., the RINGING message) about which the APM 11 has no particular necessity of executing any special process, is relayed to the APM 11 from the AP, however, only a predetermined SIP message may also be relayed to the APM 11 from the AP.

### <Operation/Effect in Present Embodiment>

An operation and an effect of the VoIP system in the present embodiment discussed above will be explained.

The VoIP system in the present embodiment, on the occasion of providing the VoIP telephony service to the terminals connected via the APs to the present system, performs the call control by transmitting and receiving the SIP packet among the APs, the APM 11 and the SIP server 1.0.

The AP, when receiving the packet wirelessly transmitted from the terminal, judges whether or not this packet is the SIP packet (the INVITE message, the 2000K message, the ACK message, the BYE message, etc). If judged to be the SIP packet, the IP packet containing this SIP packet as the payload of the IP packet itself is assembled (the SIP packet is encapsulated), and this IP packet (the encapsulated packet) is transmitted to the APM 11 that manages the APs. The encapsulation information is set in the header field of the encapsulated packet, and the loop-back flag and the pass-through flag are contained in this encapsulation information. At this time, the IP address of the APM 11 is set in the destination address of the encapsulated packet, and the purport showing "no loop-back to the AP" is set in the loop-back flag of the encapsulation information.

The APM 11 receiving the encapsulated packet, when confirming that this packet is the encapsulated packet and that the purport showing "no loop-back to the AP" is set in the loop-back flag of the encapsulation information, sends the SIP packet extracted by decapsulating this packet to the IP network 1. The sent SIP packet, in which the address of the SIP server is set as its destination, therefore reaches the SIP server 10.

On the other hand, when the SIP server 10 receives the SIP packet sent from the terminal, the predetermined SIP packet corresponding thereto is transmitted to the terminal as its destination. The IP address of the terminal is set in the destination address of this SIP packet, and hence this SIP packet reaches the AP to which this terminal is wirelessly connected. The AP receiving this SIP packet, when judging that this packet is not the encapsulated packet (this is the SIP packet transmitted from the SIP server), encapsulates the SIP packet and bypass-relays the encapsulated packet to the APM 11. On the occasion of the bypass-relay to the APM 11 from this AP, the purport showing "loop-back to the AP" is set in the loop-back flag of the encapsulation information of this encapsulated packet, and the purport showing "pass-through the AP" is set in the pass-through flag.

The AP, when receiving the bypass-relayed encapsulated packet, since the purport showing "pass-through the AP" is set in the pass-through flag of the encapsulation information, transmits the SIP packet extracted by encapsulating this packet by wireless.

Thus, the SIP packet wirelessly transmitted to the SIP server 10 from the terminal is encapsulated and then sent to the APM 11, and further the SIP packet transmitted to the terminal from the SIP server 10 is also encapsulated and bypass-relayed to the APM 11.

With this operation, according to the present embodiment, it follows that the packet assembled by encapsulating the SIP packet transmitted and received in the present system invariably passes through the APM 11. Hence, the APM 11 refers to the SIP packet (original packet) contained in the encapsulated packet and is thereby capable of conducting the priority communication control corresponding to the SIP packet. For example, if the SIP packet is the INVITE message, the APM 11 can confirm with the AP whether the priority communication for the to-be-established session of this SIP packet can be performed or not. Further, if the SIP packet is the 200OK message as a response to the RINGING message, the APM 11 can instruct the AP to register the session information so that the priority communication for the to-be-established session of this SIP packet is performed. Conversely, if the SIP packet is the 2000K message as a response to the BYE message, the APM 11 can instruct the AP to delete the session information so that the priority communication for the session regarding this SIP packet is not performed.

Hence, according to the VoIP system in the present embodiment, the quality of service (QoS) of the communications can be improved by actualizing the priority communication control.

Moreover, on the occasion of conducting the priority communication control, the SIP server 10 needs to have no special functions for carrying out the present invention and may be sufficient if having the functions of the normal type of SIP server 10.

Accordingly, on the occasion of introducing the priority communication control into the existing network, there is neither the necessity of modifying the existing SIP server nor the necessity of doing the special setting in the SIP server, and hence the priority communication control can be easily introduced into the existing system.

## Claims

1. A communication system configured by connecting a relay device performing wireless communications with a terminal, a management device managing the relay device and a server to each other via an IP network,
the relay device comprising:
a packet generating means generating an encapsulated packet containing, as a payload, a packet used regarding a predetermined protocol in received packets; and
a transferring means transferring the encapsulated packet to the management device,
the management device comprising:
a receiving means receiving the encapsulated packet transmitted from the relay device; and
a transmitting means transmitting a predetermined encapsulated packet in the encapsulated packets received by the receiving means back to the relay device.

2. A communication system according to Claim 1, wherein the relay device further comprises:
a priority table registering a communication identifier for specifying a session that is preferentially transmitted by wireless in the wireless communications with the terminal; and
a wireless transmitting means preferentially transmitting, by wireless, a packet contained as the payload of the encapsulated packet transmitted back from the management device based on the priority table, and
wherein the management device further comprises
a notifying means notifying the relay device that the communication identifier set in the packet contained as the payload of the encapsulated packet received by the receiving means is to be registered in the priority table of the relay device.

3. A communication system according to Claim 2, wherein the relay device further comprises
a setting means setting loop-back information in the encapsulated packet if the packet contained as the payload of the encapsulated packet by the packet generating means is a packet transmitted to the terminal as destination from the server, and
the transmitting means of the management device transmits back to the relay device if the loop-back information is set in the encapsulated packet received.

4. A communication system according to Claim 3, wherein
the setting means of the relay device does not set the loop-back information in the encapsulated packet if the packet contained as the payload of the encapsulated packet by the packet generating means is a packet transmitted, by wireless, to the server as destination from the terminal, and
the transmitting means of the management device transmits the packet contained as the payload of the encapsulated packet to the IP network if the loop-back information is not set in the encapsulated packet received.

5. A relay device connected to a management device via an IP network and performing wireless communications with a terminal, comprising:
a packet generating means generating an encapsulated packet containing, as a payload, a packet used regarding a predetermined protocol in received packets; and
a transferring means transferring the encapsulated packet to the management device;
a priority table registering a communication identifier for specifying a session that is preferentially transmitted, by wireless, in the wireless communications with the terminal;
a registering means registering, in the priority table, the communication identifier of which the management device notifies according to the encapsulated packet transferred by the transferring means; and
a wireless transmission means preferentially transmitting, by wireless, the packet contained as the payload of the encapsulated packet transmitted back from the management device based on the priority table.

6. A relay device according to Claim 5, further comprising:
a setting means setting loop-back information in the encapsulated packet to be transferred to the management device so that the encapsulated packet is transmitted back from the management device if the packet contained as the payload of the encapsulated packet by the packet generating means is a packet transmitted to the terminal as destination from a server connected to the IP network.

7. A relay device according to Claim 6, wherein the setting means does not set the loop-back information in the encapsulated packet to be transferred to the management device so that the encapsulated packet is not transmitted back from the management device if the packet contained as the payload of the encapsulated packet by the packet generating means is a packet transmitted by wireless to the server as destination from the terminal.

8. A management device connected via an IP network to a relay device performing wireless communications with a terminal and managing the relay device, comprising:
a receiving means receiving an encapsulated packet containing, as a payload, a packet used regarding a predetermined protocol in packets received in the relay device;
a notifying means notifying the relay device of a communication identifier set in the packet contained as the payload of the encapsulated packet received by the receiving means so that a session specified by the communication identifier is preferentially transmitted by wireless in the wireless communications between the relay device and the terminal; and
a transmitting means transmitting back the encapsulated packet received by the receiving means to the relay device.

9. A management device according to Claim 8, wherein the transmitting means transmits back the encapsulated packet to the relay device according to loop-back information to be set if the packet contained as the payload of the encapsulated packet received by the receiving means is a packet transmitted to the terminal as destination from the server connected to the IP network.

10. A management device according to Claim 9, wherein the transmitting means, if the loop-back information is not set in the encapsulated packet received by the receiving means, judges that the packet contained as the payload of the encapsulated packet is the packet transmitted to the server as destination from the terminal, and transmits the packet contained as the payload of the encapsulated packet to the IP network.
